Europäisches Patentamt

European Patent Office

Office européen des brevets

(11) Veröffentlichungsnummer: **0 270 921 B1**

# EUROPÄISCHE PATENTSCHRIFT

(45) Veröffentlichungstag der Patentschrift: **11.09.91**

(51) Int. Cl.⁵: **F01D 25/18, //F02C6/12**

(21) Anmeldenummer: **87117365.4**

(22) Anmeldetag: **25.11.87**

(54) **Schmiersystem für einen Turbolader.**

(30) Priorität: **10.12.86 DE 3642121**

(43) Veröffentlichungstag der Anmeldung:
**15.06.88 Patentblatt 88/24**

(45) Bekanntmachung des Hinweises auf die
Patenterteilung:
**11.09.91 Patentblatt 91/37**

(84) Benannte Vertragsstaaten:
**FR GB IT SE**

(56) Entgegenhaltungen:
**DE-A- 2 443 204**
**DE-A- 2 910 932**
**DE-A- 3 039 961**
**DE-A- 3 133 953**
**DE-A- 3 307 726**

(73) Patentinhaber: **MTU MOTOREN- UND
TURBINEN-UNION MÜNCHEN GMBH
Dachauer Strasse 665 Postfach 50 06 40
W-8000 München 50(DE)**

(72) Erfinder: **Rossmann, Axel
Bachweg 4
W-8047 Karlsfeld(DE)**
Erfinder: **Hüther, Werner, Dr.
Nikolaus-Lenau-Strasse 8
W-8047 Karlsfeld(DE)**

EP 0 270 921 B1

**Beschreibung**

Die Erfindung betrifft ein Antriebssystem mit einem Verbrennungsmotor und einem damit gekoppelten Abgasturbolader.

Die Gleitlager von Abgasturboladern der eingangs geschilderten Gattung werden bisher mit Öl aus dem Schmierölkreislauf des Motors geschmiert. Aufgrund der in der Turbine vorliegenden hohen Temperaturen bringt diese Art der Lagerschmierung -insbesondere für das turbinenseitige Gleitlager - eine Reihe von Nachteilen mit sich.

Wegen der Aufheizung des Schmieröls im turbinenseitigen Gleitlager ist eine Vergrößerung des Ölkühlers gegenüber dem eines Hubkolbenmotors ohne Turbolader notwendig. Dennoch tritt ein schnellerer Verschleiß und Verbrauch des Öls auf.

Es kann bei starker Überhitzung des Turbinenlagers zur Koksbildung kommen, mit der Gefahr von Verunreinigungen und Schädigung der Motorkomponenten im Ölkreislauf. Insbesondere nach dem Abstellen des Motors ist die Gefahr von Lagerschäden und Koksbildung für das turbinenseitige Lager besonders groß, da die noch heiße Turbine das nicht mehr mit kühlendem Öl versorgte Lager übermäßig aufheizen kann.

Es sind Turbolader bekannt, bei denen der lagernahe Turbinengehäusebereich mit Wasser des Motor-Kühlwasserkreislaufs gekühlt wird, um auf diese Weise eine Überhitzung des turbinenseitigen Gleitlagers zu verhindern. Dies ist jedoch eine technisch aufwendige Lösung, da sowohl der Ölkreislauf als auch der Kühlwasserkreislauf des Verbrennungsmotors auf den Abgasturbolader ausgedehnt werden muß.

Aufgabe der Erfindung ist es, ein Antriebssystem der gattungsgemäßen Art so zu verbessern, daß gleichzeitig eine effektive Schmierung und Kühlung des Abgasturboladers mit baulich einfachen Mitteln erzielt wird.

Zur Lösung der gestellten Aufgabe wird bei einer Einrichtung der eingangs angegebenen Art erfindungsgemäß vorgeschlagen, daß der Abgasturbolader mit Wasser geschmierte Gleitlager aufweist. Vorzugsweise ist dabei die Wasserversorgung der Gleitlager an den Kühlwasserkreislauf des Antriebssystems angeschlossen.

Es ist zwar bekannt, Gleitlager mit Wasser anstelle von Öl zu schmieren, wenn diese Lager in Maschinen eingesetzt werden, die unter bzw. in der Nähe von Wasser betrieben werden, der Förderung von Wasser dienen oder mit Dampf betrieben werden (Siehe DE-A-2 443 204). In diesem Fall würde es beim Einsatz eines anderen Schmiermittels Dichtungsprobleme zwischen Schmiermittel und Wasser Dampf geben. Andererseits ist bei Antriebssystemen, welche Verbrennungsmotoren umfassen, aus einem analogen Grund nur der Einsatz von ölgeschmierten Lagern als praktikabel angesehen worden.

Mit der Erfindung lassen sich erhebliche bauliche Vereinfachungen erzielen. Es entfällt die aufwendige Ölversorgung des Turboladers und die Wasserversorgung kann neben der Lagerschmierung gleichzeitig zur Kühlung des Turboladers herangezogen werden.

Des weiteren hat die Verwendung von Wasser anstelle von Öl als Schmiermittel den Vorteil, erheblich geringere Reibungskräfte aufgrund der geringeren Viskosität von Wasser zu verursachen, was sich besonders bei den hohen Abgasturbolader-Drehzahlen günstig auswirkt. Dabei ist der Druck des zur Schmierung verwendeten Wassers so hoch, daß Dampfblasenbildung vermieden wird.

Die im Rahmen der Erfindung weiter vorgesehene Verwendung von keramischen Werkstoffen für die Gleitglieder hat den Vorteil der Korrosionsfestigkeit und guter Gleiteigenschaften. Dabei ist es sinnvoll, die rotierenden, die stationären oder alle Gleitglieder aus keramischen Werkstoffen zu fertigen. Die rotierenden Gleitglieder können als auf der Welle angeordnete keramische Buchsen oder als aufgespritzte keramische Schicht ausgeführt sein.

Als keramische Gleitlagerwerkstoffe kommen vorzugsweise nicht-oxidische Keramiken wie SiC oder $Si_3N_4$ zum Einsatz oder auch ganz- oder teilstabilisierte Oxidkeramiken wie $Al_2O_3$ oder $ZrO_2$, oder Kombinationen dieser Werkstoffe.

Die gemäß weiterer Ausbildung der Erfindung vorgesehene Anordnung eines Wasserpumpenrades des Kühlwasserkreislaufes auf der Turboladerwelle zwischen Radialverdichter und -turbine hat den Vorteil, daß dadurch die mechanisch vom Motor angetriebene Kühlmittelpumpe ersetzt wird, und eine erwünschte lastabhängige Kühlmittelversorgung erreicht wird.

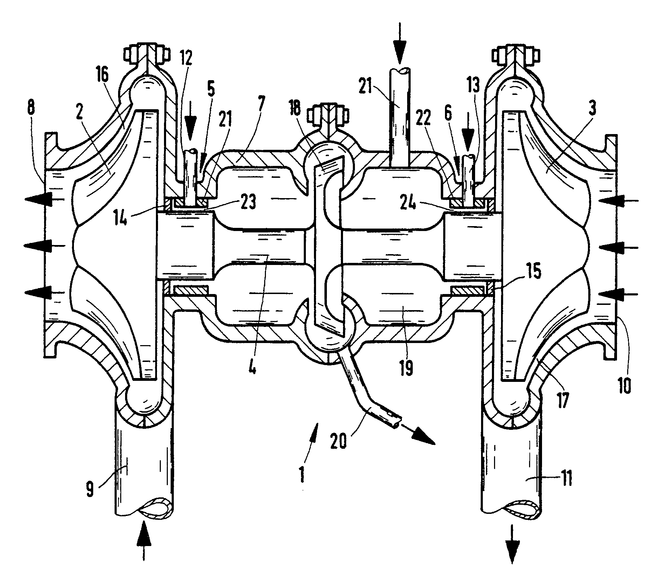

Die Erfindung wird nachfolgend anhand eines Ausführungsbeispiels unter Bezugnahme auf die Zeichnung erläutert.

In der Zeichnung ist ein Abgasturbolader 1 schematisch im Axialschnitt gezeigt, bei dem eine von einem nicht dargestellten Verbrennungsmotor beaufschlagte Radialturbine 2 mit einem Radialverdichter 3 auf einer gemeinsamen Welle 4 angeordnet ist. Dabei tritt Abgas des Verbrennungsmotors durch die Rohrleitung 9 in den Turbinenraum 16 ein und strömt axial durch die Öffnung 8 ab. Vom Radialverdichter 3 angesaugte Frischluft tritt axial durch die Öffnung 10 in den Verdichterraum 17 ein und wird durch die Rohrleitung 11 dem Verbrennungsmotor zugeführt.

Die Welle 4 ist über zwei wassergeschmierte Gleitlager 5 und 6 in einem Gehäuse 7 gelagert. Über die Rohrleitungen 12, 13 strömt Wasser zur Schmierung aus dem Kühlwasserkreislauf in die Lagerspalte 23 und 24 der Gleitlager 5 und 6. Über Gleitringdichtungen 14, 15 sind die Gleitlager 5, 6 gegenüber dem Turbinenraum 16 bzw. Verdichterraum 17 abgedichtet.

Zwischen den Gleitlagern 5 und 6 ist auf der Welle 4 ein Wasserpumpenrad 18 vorgesehen, welches im Raum 19 befindliches Kühlwasser über die Rohrleitung 20 dem Kühlwasserkreislauf des Verbrennungsmotors zuführt. Der Raum 19 wird dabei zum einen über die Rohrleitung 21 mit Wasser vom Kühlwasserkreislauf des Verbrennungsmotors kommend versorgt, zum zweiten strömt das durch die Rohrleitungen 12 und 13 den Gleitlagern 5 und 6 zugeführte Wasser durch die Lagerspalte 23 und 24 in den Raum 19. Das Gehäuse 7 des Turboladers 1 wird außerdem durch das im Raum 19 befindliche Wasser gekühlt.

## Patentansprüche

1. Antriebssystem mit einem Verbrennungsmotor und einem damit gekoppelten Abgasturbolader, dadurch gekennzeichnet, daß der Abgasturbolader (1) mit Wasser geschmierte Gleitlager (5, 6) aufweist.

2. Antriebssystem nach Anspruch 1, dadurch gekennzeichnet, daß die Wasserversorgung der Gleitlager (5, 6) an den Kühlwasserkreislauf des Antriebssystems angeschlossen sind.

3. Antriebssystem nach Anspruch 1 und 2, dadurch gekennzeichnet, daß die rotierenden und/oder stationären Gleitglieder (21, 22) der Gleitlager (5, 6) aus keramischen Werkstoffen bestehen.

4. Antriebssystem nach Anspruch 3, dadurch gekennzeichnet, daß die keramischen Werkstoffe der Gleitglieder (21, 22) nicht-oxidische Keramiken wie SiC oder $Si_3N_4$ sind.

5. Antriebssystem nach Anspruch 3, dadurch gekennzeichnet, daß die keramischen Werkstoffe ganz- oder teilstabilisierte Oxidkeramiken wie $Al_2O_3$ oder $ZrO_2$ sind.

6. Antriebssystem nach den Ansprüchen 4 und 5, dadurch gekennzeichnet, daß für die Gleitglieder (21, 22) Kombinationen dieser Werkstoffe verwendet werden.

7. Antriebssystem nach den Ansprüchen 1 bis 6, dadurch gekennzeichnet, daß die rotierenden Gleitglieder als auf der Welle (4) angeordnete keramische Buchsen ausgeführt sind.

8. Antriebssystem nach den Ansprüchen 1 bis 6, dadurch gekennzeichnet, daß die rotierenden Gleitglieder als aufgespritzte keramische Schichten ausgeführt sind.

9. Antriebssystem nach den Ansprüchen 1 bis 8, dadurch gekennzeichnet, daß ein Wasserpumpenrad (18) für den Kühlwasserkreislauf des Antriebssystems auf der Welle (4) des Abgasturboladers (1) zwischen Radialverdichter (3) und -turbine (2) angeordnet ist.

10. Antriebssystem nach den Ansprüchen 1 bis 9, dadurch gekennzeichnet, daß die Abdichtung der Gleitlager (5, 6) durch Gleitringdichtungen (14, 15) erfolgt.

## Claims

1. Drive system having a combustion engine and an exhaust gas turbocharger coupled to it, characterised in that the exhaust gas turbocharger (1) has friction bearings (5, 6) lubricated with water.

2. Drive system according to claim 1, characterised in that the water supplies to the friction bearings (5, 6) are connected to the cooling-water circulation of the drive system.

3. Drive system according to claim 1 and 2, characterised in that the rotating and/or stationary friction members (21, 22) of the friction bearings (5, 6) are made of ceramic materials.

4. Drive system according to claim 3, characterised in that the ceramic materials of the friction members (21, 22) are non-oxidic ceramics such as SiC or $Si_3N_4$.

5. Drive system according to claim 3, characterised in that the ceramic materials are completely or partially stabilized oxide ceramics such as $Al_2O_3$ or $ZrO_2$.

6. Drive system according to claims 4 and 5, characterised in that combinations of these materials are used for the friction members (21, 22).

7. Drive system according to claims 1 to 6, characterised in that the rotating friction members are designed as ceramic bushings arranged on the shaft (4).

8. Drive system according to claims 1 to 6, characterised in that the rotating friction members are designed as sprayed-on ceramic layers.

**9.** Drive system according to claims 1 to 8, characterised in that a water pump wheel (18) for the cooling-water circulation of the drive system is arranged on the shaft (4) of the discharge gas turbocharger (1) between the radial compressor (3) and turbine (2).

**10.** Drive system according to claims 1 to 9, characterised in that sealing of the friction bearings (5, 6) is effected by bearing ring seals (14, 15).

**Revendications**

**1.** Système d'entraînement comprenant un moteur à combustion interne et un turbocompresseur à gaz d'échappement couplé au moteur, caractérisé en ce que le turbocompresseur (1) à gaz d'échappement présente des paliers glissants (5, 6) lubrifiés à l'eau.

**2.** Système d'entraînement selon la revendication 1, caractérisé en ce que l'alimentation en eau des paliers glissants (5, 6) se fait par branchement sur le circuit d'eau de refroidissement du système d'entraînement.

**3.** Système d'entraînement selon l'une quelconque des revendications 1 et 2, caractérisé en ce que les pièces de glissement (21, 22) fixes ou tournantes des paliers glissants (5, 6) sont en matériaux céramiques.

**4.** Système d'entraînement selon la revendication 3, caractérisé en ce que les matériaux céramiques des pièces de glissement (21, 22) sont des céramiques non oxydes, telles que SiC ou $Si_3N_4$.

**5.** Système d'entraînement selon la revendication 3, caractérisé en ce que les matériaux céramiques sont des céramiques non obtenues par voie d'oxydation totalement ou partiellement stabilisées, telles que $Al_2O_3$ ou $ZrO_2$.

**6.** Système d'entraînement selon les revendications 4 et 5, caractérisé en ce qu'on utilise pour les pièces de glissement (21, 22) des combinaisons de ces matériaux.

**7.** Système d'entraînement selon les revendications 1 à 6, caractérisé en ce qu'on réalise les pièces de glissement tournantes sous forme de douilles céramiques disposées sur l'arbre (4).

**8.** Système d'entraînement selon les revendications 1 à 6, caractérisé en ce qu'on réalise les pièces de glissement tournantes en couches céramiques déposées par pulvérisation.

**9.** Système d'entraînement selon les revendications 1 à 8, caractérisé en ce qu'on place une turbine de pompe à eau (18) pour le circuit d'eau de refroidissement du système d'entraînement sur l'arbre (4) du turbocompresseur (1) à gaz d'échappement entre le compresseur radial (3) et la turbine radiale (2).

**10.** Système d'entraînement selon les revendications 1 à 9, caractérisé en ce qu'on réalise l'étanchéité des paliers glissants (5, 6) par des garnitures mécaniques (14, 15).